# EUROPEAN PATENT APPLICATION

(11) **EP 4 033 377 A1**
(43) Date of publication of application: **27.07.2022**
(21) Application number: 22150136.4
(22) Date of filing: 04.01.2022
(51) Int. Cl.: G06F 16/9035, G06F 16/906, G06N 20/00

(54) **INFORMATION PROCESSING APPARATUS, INFORMATION PROCESSING SYSTEM, INFORMATION PROCESSING METHOD, AND CARRIER MEANS**

(30) Priority: 22.01.2021 JP 2021008362
(71) Applicant: Ricoh Company, Ltd., Tokyo 143-8555 (JP)
(72) Inventor: KAWAMURA, Shintaro, Tokyo, 143-8555 (JP); IGUCHI, Shinya, Tokyo, 143-8555 (JP); SHIMADA, Atsuko, Tokyo, 143-8555 (JP); NAITOH, Shohichi, Tokyo, 143-8555 (JP); MATSUBARA, Mayumi, Tokyo, 143-8555 (JP)
(74) Representative: White, Duncan Rohan

(57) **Abstract**

An information processing apparatus (3) responds an answer to a question transmitted by an input apparatus (2) that inputs the question. The information processing apparatus (3) includes reception means (31) for receiving the question transmitted by the input apparatus (2). The information processing apparatus (3) includes extraction means (33) for obtaining answer source information for creating an answer to the received question, the answer source information associating natural language information given in advance with non-language information by deep learning, the non-language information including configuration information. The information processing apparatus (3) includes transmission means (31) for transmitting, to the input apparatus (2), answer content information to the question or additional content request information requesting an input of additional content to the question, the answer content information and the additional content request information being created based on the answer source information.

## Description

### BACKGROUND

### Technical Field

Embodiments of the present disclosure relate to an information processing apparatus, an information processing system, an information processing method, and carrier means.

### Related Art

In recent years, deep learning has been used in various situations as one of machine learning techniques. In this deep learning, a framework is known in which a model is automatically built by learning rules of input/output relations of given existing data as a distributed network, and a prediction for new input data is output based on the model. In natural language processing as well, as represented by Bidirectional Encoder Representation from Transformers (BERT), deep learning-based models have appeared that obtain a distributed representation that take context into consideration. Such models have top-level performance in all tasks related to natural language processing. Further, application examples of such models include classification of message contents on a social networking service (SNS), Voice of Customer (VOC) analysis of electronic commerce (EC) sites, and document summarization and generation. Use of such models are growing.

Furthermore, for example, Japanese Unexamined Patent Application Publication No. 2004-302660 discloses a technique of estimating answer media (text, image, video, voice) to be used based on a question sentence in natural language and outputting an answer to the question sentence by the estimated answer medium.

However, in the technique according to the related art, there has been no idea of generating an answer to a given question content based on multiple information items including texts and images related to the question content, when responding the answer obtained by deep learning to the given question content. This may lead to low accuracy of the answer to the question content.

### SUMMARY

To address such issue, an embodiment of the present invention includes an information processing apparatus that responds an answer to a question transmitted by an input apparatus that inputs the question. The information processing apparatus includes reception means for receiving the question transmitted by the input apparatus. The information processing apparatus includes extraction means for obtaining answer source information for creating an answer to the received question, the answer source information associating natural language information given in advance with non-language information by deep learning, the non-language information including configuration information. The information processing apparatus includes transmission means for transmitting, to the input apparatus, answer content information to the question or additional content request information requesting an input of additional content to the question, the answer content information and the additional content request information being created based on the answer source information.

An embodiment of the present invention includes an information processing method performed by an information processing apparatus that responds an answer to a question transmitted by an input apparatus that inputs the question. The information processing method includes receiving the question transmitted by the input apparatus. The information processing method includes obtaining answer source information for creating an answer to the received question, the answer source information associating natural language information given in advance with non-language information by deep learning, the non-language information including configuration information. The information processing method includes transmitting, to the input apparatus, answer content information to the question or additional content request information requesting an input of additional content to the question, the answer content information and the additional content request information being created based on the answer source information.

An embodiment of the present disclosure includes carrier means carrying computer readable code for controlling a computer to perform an information processing method performed by an information processing apparatus that responds an answer to a question transmitted by an input apparatus that inputs the question. The information processing method includes receiving the question transmitted by the input apparatus. The information processing method includes obtaining answer source information for creating an answer to the received question, the answer source information associating natural language information given in advance with non-language information by deep learning, the non-language information including configuration information. The information processing method includes transmitting, to the input apparatus, answer content information to the question or additional content request information requesting an input of additional content to the question, the answer content information and the additional content request information being created based on the answer source information.

According to one or more embodiments of the present invention, the accuracy of an answer to a given question content is improved.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example of an overview of a configuration of a question answering system, according to an embodiment of the present invention;
FIG. 2 is a block diagram illustrating an example of a hardware configuration of each of an input apparatus and an information processing apparatus, according to an embodiment of the present invention;
FIG. 3 is a block diagram illustrating an example of a functional configuration of the question answering system, according to an embodiment of the present invention;
FIG. 4 is a table illustrating an example of data structure of an object-to-be-extracted management table, according to an embodiment of the present invention;
FIG. 5A is a table illustrating an example of data structure of an image information management table, according to an embodiment of the present invention;
FIG. 5B is a table illustrating an example of data structure of a product configuration management table, according to an embodiment of the present invention;
FIG. 6 is a model diagram illustrating an example of a form of a knowledge source, according to an embodiment of the present invention;
FIG. 7 is a sequence diagram illustrating examples of an operation of generating the knowledge source and an operation of responding to a question, according to an embodiment of the present invention;
FIG. 8 is an illustration of an example of a screen display for receiving an input of a question, according to an embodiment of the present invention;
FIG. 9 is a flowchart illustrating an example of a process of creating an answer and an additional question, according to an embodiment of the present invention;
FIG. 10 is an illustration of an example of a screen display displaying contents of an inference process, according to an embodiment of the present invention;
FIG. 11 is an illustration of an example of a screen display displaying contents of a process explanation, according to an embodiment of the present invention; and
FIG. 12 is an illustration of an example of a screen display for receiving an input of additional information, according to an embodiment of the present invention.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Referring to the drawings, embodiments of the present invention are described. In the description of the drawings, the same elements are denoted by the same reference numerals, and redundant descriptions thereof are omitted.

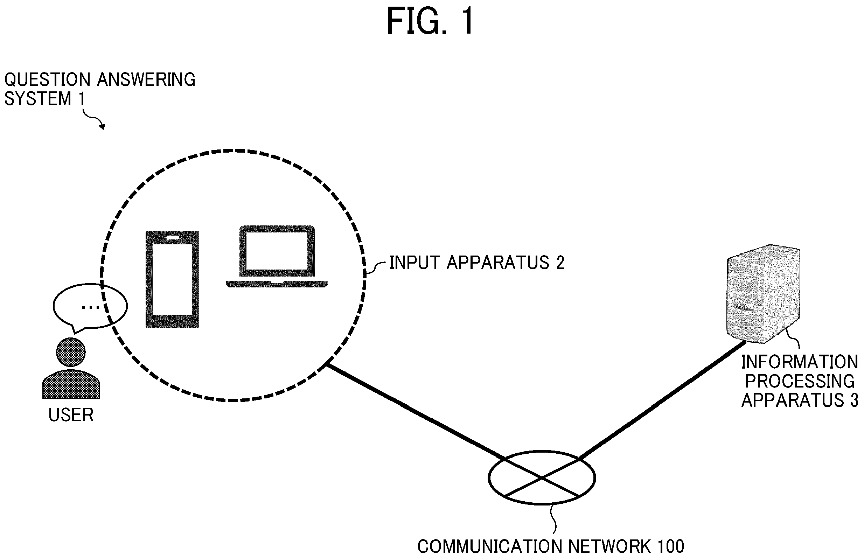

Embodiment:
A description is given below of the present embodiment, with reference to FIG. 1 to FIG. 12.

Overview of Configuration of Question Answering System 1:
FIG. 1 is a diagram illustrating an example of an overview of a configuration of a question answering system 1, according to the present embodiment. The question answering system 1 illustrated in FIG. 1 is an example of a system that provides an answer generated by an information processing apparatus 3 to an input apparatus 2 that gives a question to the information processing apparatus 3. The question answering system 1 is configured to, for example, perform answer generation, which is one of tasks of natural language processing using a knowledge source 300 generated by the information processing apparatus 3, to a question generated based on voice data collected by the input apparatus 2. As illustrated in FIG. 1, the question answering system 1 includes the input apparatus 2 used by a user who inputs a question, and the information processing apparatus 3 that communicates with the input apparatus 2, processes content of the question transmitted by the input apparatus 2, and transmits an answer to the input apparatus 2. The input apparatus 2 and the information processing apparatus 3 are connected to each other via a communication network 100. The communication network 100 is implemented by, for example, the Internet, a mobile communication network, and a local area network (LAN). In another example, the communication network 100 include, in addition to a wired communication, a network by a wireless communication in compliance with, for example, 3rd Generation (3G), 4th Generation (4G), 5th Generation (5G), Worldwide Interoperability for Microwave Access (WiMAX), and Long Term Evolution (LTE).

Input Apparatus:
The input apparatus 2 is implemented by an information processing apparatus (computer system) installed with a general-purpose operating system (OS). The input apparatus 2 receives an input of voice (sound) information of voice (natural language) that is spoken by a human and obtained through a microphone or sound generated by a machine, converts the voice (sound) information into text information, and transmits the text information to the information processing apparatus 3 through the communication network 100. Further, the input apparatus 2 receives text information transmitted by the information processing apparatus 3, converts the text information into voice (sound) information, and outputs sound or voice according to the voice (sound) information to the outside through a speaker. Furthermore, the input apparatus 2 converts the received text information into screen information to be displayed on display means, and causes the display means to display a screen based on the screen information. In one example, the input apparatus 2 is a communication terminal having communication capability such as a smartphone, a tablet terminal, a personal digital assistant (PDA), or a wearable personal computer (PC) of sunglasses type or wristwatch type, for example. In another example, the input apparatus 2 is a general-purpose PC. In other words, the input apparatus 2 to be used may be any terminal capable of executing software such as browser software.

Information Processing Apparatus:
The information processing apparatus 3 is implemented by an information processing apparatus (computer system) installed with a general-purpose OS and having a server function. The information processing apparatus 3 communicates with the input apparatus 2 through the communication network 100, and processes data related to question content transmitted by the input apparatus 2. Further, the information processing apparatus 3 generates answer (response) information related to the question content and information for receiving additional question content, and transmits the generated information to the input apparatus 2. In the following description, a term "deep learning", which is as an example of machine learning, is used to refer to the machine learning. Furthermore, in the present embodiment, the information processing apparatus 3 generates a "knowledge source 300" representing answer source information for creating an answer to a particular question, by using natural language information and non-language information, such as an image or configuration information. The natural language information and the non-language information are associated with each other by deep learning. In the following description, the "knowledge source 300" representing answer source information for creating an answer to a particular question may be referred to as the knowledge source 300. The information processing apparatus 3 deductively generates an answer to a question content given by a user by using the generated knowledge source 300. In another example, the information processing apparatus 3 is a general-purpose PC, provided that the information processing apparatus has a configuration configured to generate the knowledge source 300.

Terms:
The term "question answering" used in the present embodiment refers to analyzing a given question using deep learning and providing, to a user (questioner) who has made the question, exact information that the user wants. On the other hand, the term "search" refers to performing a search with a keyword that one considers by oneself, and to retrieve desired information by analyzing the search result.

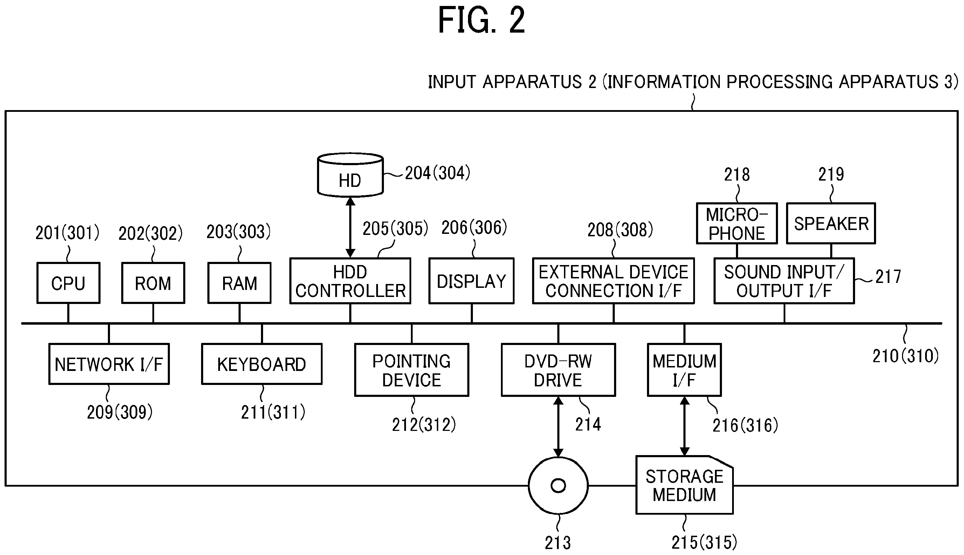

Hardware Configuration:
Hardware Configuration of Input Apparatus and Information Processing Apparatus:
A description is now given of a hardware configuration of each apparatus, according to an embodiment. FIG. 2 is a block diagram illustrating an example of a hardware configuration of each of the input apparatus 2 and the information processing apparatus 3, according to the present embodiment. As illustrated in FIG. 2, the input apparatus 2 includes hardware resources including a central processing unit (CPU) 201, a read only memory (ROM) 202, a random access memory (RAM) 203, a hard disk (HD) 204, a hard disk drive (HDD) controller 205, a display 206, an external device connection interface (I/F) 208, a network I/F 209, a keyboard 211, a pointing device 212, a digital versatile disk-rewritable (DVD-RW) drive 214, a medium I/F 216, a microphone 218, a speaker 219, a sound input/output I/F 217, and a bus line 210.

The CPU 201 controls overall operation of the input apparatus 2. The ROM 202 stores a program to boot the CPU 201. The RAM 203 is used as a work area for the CPU 201. The HD 204 stores various data such as a control program. The HDD controller 205 controls reading or writing of various data from or to the HD 204 under control of the CPU 201. The display 206 displays various information such as a cursor, menu, window, characters, virtual numeric keypad, execution key, or image. The display 206 is one example of a display device (display means). The external device connection I/F 208 is an interface for connecting the input apparatus 2 to various external devices. Examples of the external devices include, but are not limited, a universal serial bus (USB) memory and a USB device. Examples of the bus line 210 include, but are not limited to, an address bus and a data bus, which electrically connects the elements such as the CPU 201 with each other.

The network I/F 209 is an interface that enables the input apparatus 2 to perform data communication through the communication network 100. The keyboard 211 is an example of an input device (input means) provided with a plurality of keys that allows a user to input characters, numerals, or various instructions. The pointing device 212 is an example of an input device (input means) that allows a user to select or execute various instructions, select an object for processing, or move a cursor being displayed. In another example, the input device (input means) includes at least one of a touch panel or a voice input apparatus, in addition to or in alternative to the keyboard 211 and the pointing device 212. The DVD-RW drive 214 controls reading or writing (storing) various data from or to a DVD-RW 213, which is an example of a removable storage medium. In another example, the removable storage medium includes at least one of digital versatile disk-recordable (DVD-R) or a Blu-ray^{®} disc, in addition to or in alternative to the DVD-RW. The medium I/F 216 controls reading or writing data from or to a storage medium 215 such as a flash memory. The microphone 218 is an example of sound collecting device (sound collecting means) that collects voice or ambient sound (audio signal). The speaker 219 is an example of a sound output device (sound output means) that outputs an output sound signal obtained by converting an input sound signal. The sound input/output I/F 217 is a circuit that processes an input or output of a sound signal between the microphone 218 and the speaker 219 under control of the CPU 201.

The information processing apparatus 3 is implemented by a general-purpose computer. As illustrated in FIG. 2, the information processing apparatus 3 includes hardware resources including a CPU 301, a ROM 302, a RAM 303, an HD 304, an HDD controller 305, a display 306, an external device connection I/F 308, a network I/F 309, a keyboard 311, a pointing device 312, a medium I/F 316, and a bus line 310.

Of these hardware elements, the CPU 301 to the pointing device 312 has the same or substantially the same configuration as the hardware elements of the CPU 201 to the pointing device 212 of the input apparatus 2, and the redundant detailed descriptions thereof are omitted below. The medium I/F 316 controls reading or writing (storing) data from or to a storage medium 315 such as a flash memory. In one example, when the information processing apparatus 3 is a general-purpose PC, the information processing apparatus 3 includes a hardware resource corresponding to the DVD-RW drive 214 of the input apparatus 2.

The computer illustrated in FIG. 2 is one example. Other examples of the information processing apparatus 3 include, but are not limited to, a head up display (HUD) apparatus, an industrial machine, a networked home appliance, a mobile phone, a smartphone, a tablet terminal, a game console, and a personal digital assistant (PDA).

In one example, any one of the above-described control programs is recorded in a file in a format installable or executable on a computer-readable storage medium or is downloaded through a network for distribution. Examples of the storage medium include, but are not limited to, a compact disc recordable (CD-R), a DVD, a Blu-ray^{®} disc, a secure digital (SD) card, and a USB memory. In another example, such storage medium is provided in domestic markets or foreign markets as program products. For example, the information processing apparatus 3 implements an information processing method according to the present invention by executing a program according to the present invention.

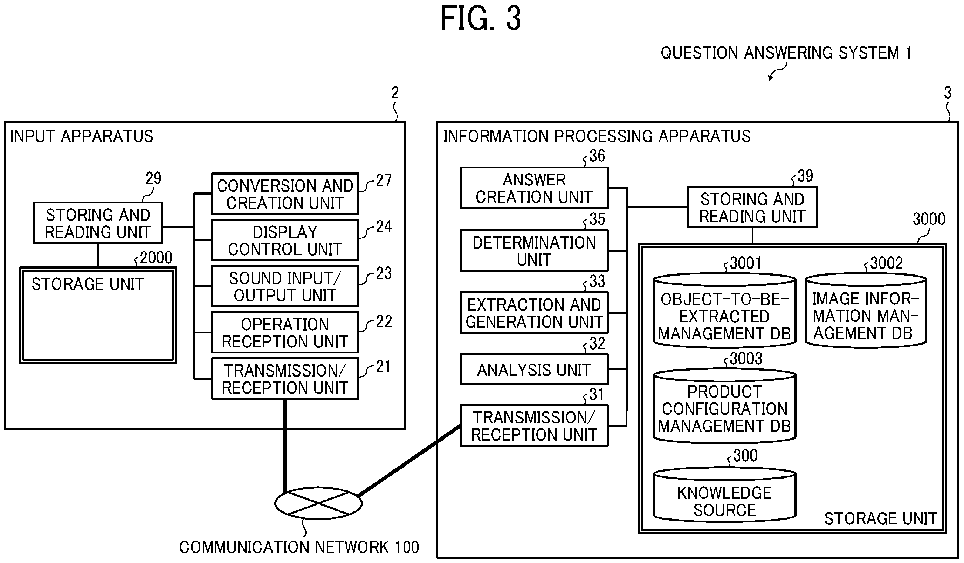

Functional Configuration of Question Answering System:
A description is now given of a functional configuration of each apparatus according to an embodiment, with reference to FIG. 3 to FIG. 6. FIG. 3 is a block diagram illustrating an example of a functional configuration of the question answering system 1, according to the present embodiment.

Functional Configuration of Input Apparatus:
As illustrated in FIG. 3, the input apparatus 2 includes a transmission/reception unit 21, an operation reception unit 22, a sound input/output unit 23, a display control unit 24, a conversion and creation unit 27, and a storing and reading unit 29. These units are functions that are implemented by or that are caused to function by operating any of the hardware resources illustrated in FIG. 2 in cooperation with instructions of the CPU 201 according to the program dedicated to the input apparatus 2 expanded to the RAM 203 from at least one of the ROM 202 and the HD 204. The input apparatus 2 further includes a storage unit 2000 implemented by the ROM 202 or the HD 204 illustrated in FIG. 2. In the storage unit 2000, an input processing program to be executed by the input apparatus 2 is stored. Further, the storage unit 2000 stores and manages a communication application for communication with the information processing apparatus 3.

Each Functional Unit of Input Apparatus:
A detailed description is now given of each functional unit of the input apparatus 2. The transmission/reception unit 21 of the input apparatus 2 illustrated in FIG. 3 is implemented mainly by the external device connection I/F 208 and the network I/F 209 illustrated in FIG. 2 operating under control of the CPU 201. The transmission/reception unit 21 exchanges various data (or information) with the information processing apparatus 3 through the communication network 100. In the present embodiment, the transmission/reception unit 21 functions as or includes means caused to function as examples of transmission means and reception means.

The operation reception unit 22 is implemented mainly by the keyboard 211 and the pointing device 212 illustrated in FIG. 2 operating under control of the CPU 201. The operation reception unit 22 receives various operations and an input for selection from a user. In another example, an operation button to be pressed or having a user interface (UI) to be tapped is used as another input device (input means), in addition to the keyboard 211 and the pointing device 212. In the present embodiment, the operation reception unit 22 functions as or includes means caused to function as an example of operation reception means.

The sound input/output unit 23 is implemented mainly by the microphone 218 and the sound input/output I/F 217 illustrated in FIG. 2 operating under control of the CPU 201. The sound input/output unit 23 collects voice spoken by a user or sound generated by a machine to an input apparatus 2. The sound input/output unit 23 is implemented mainly by the speaker 219 and the sound input/output I/F 217 illustrated in FIG. 2 operating under control of the CPU 201. The sound input/output unit 23 converts information related to a response transmitted by the information processing apparatus 3 into a sound signal, and outputs sound through the speaker 219. In the present embodiment, the sound input/output unit 23 functions as or includes means caused to function as an example of sound input/output means. Further, in the present embodiment, the operation reception unit 22 and the sound input/output unit 23 functions as or includes means caused to function as an example of input means.

The display control unit 24 is implemented mainly by processing of the CPU 201 to the display 206 illustrated in FIG. 2, and controls the display 206 to display various images, characters, code information, or the like. In the present embodiment, the display control unit 24 functions as or includes means caused to function as an example of display control means.

The conversion and creation unit 27 is implemented mainly by processing of CPU 201 illustrated in FIG. 2. The conversion and creation unit 27 converts sound information in natural language or the like collected by the sound input/output unit 23 into text (character) information, and creates a question sentence. In the present embodiment, the conversion and creation unit 27 functions as or includes means caused to function as an example of conversion and creation means.

The storing and reading unit 29 is implemented mainly by processing of the CPU 201 illustrated in FIG. 2 to at least one of the ROM 202 and the HD 204. The storing and reading unit 29 stores various data (or information) in the storage unit 2000 and/or reads various data (or information) from the storage unit 2000. In the present embodiment, the storing and reading unit 29 functions as or includes means caused to function as an example of storing and reading means.

Functional Configuration of Information Processing Apparatus:
As illustrated in FIG. 3, the information processing apparatus 3 includes a transmission/reception unit 31, an analysis unit 32, an extraction and generation unit 33, a determination unit 35, an answer creation unit 36, and a storing and reading unit 39. These units are functions that are implemented by or that are caused to function by operating any of the hardware resources illustrated in FIG. 3 in cooperation with instructions of the CPU 301 according to the program dedicated to the information processing apparatus 3 expanded to the RAM 303 from at least one of the ROM 302 and the HD 304. The information processing apparatus 3 includes a storage unit 3000 implemented by at least one of the ROM 302 and the HD 304 illustrated in FIG. 3. In the storage unit 3000, an information processing program to be executed by the information processing apparatus 3 is stored. Further, a communication application for communication with the input apparatus 2 is stored and managed in the storage unit 3000.

Object-to-be-extracted Management Table:

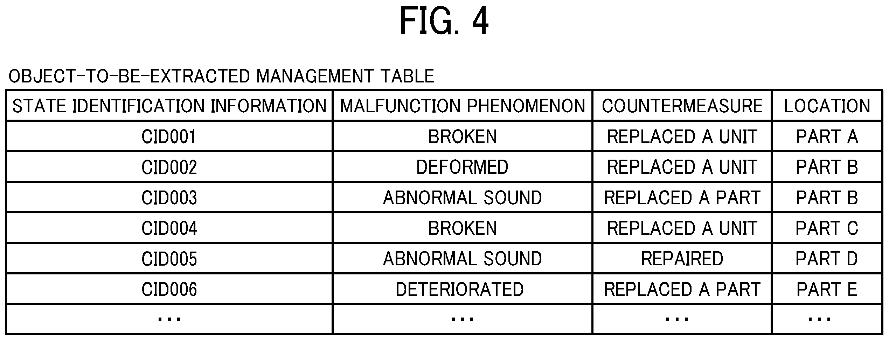

FIG. 4 is a table illustrating an example of data structure of an object-to-be-extracted management table, according to the present embodiment. In the storage unit 3000, an object-to-be-extracted management database (DB) 3001, which is implemented by the object-to-be-extracted management table as illustrated in FIG. 4, is stored. The object-to-be-extracted management table stores and manages, for each state identification information, a malfunction phenomenon, a countermeasure, and a location in association with each other. Among these items, the malfunction phenomenon is an item that is obtained by extracting in advance what kind of malfunction has occurred in a managed apparatus to be maintained. In the disclosure, the managed apparatus collectively refers to apparatuses, devices, and machines for which regular maintenance is to be performed, such as a multifunction peripheral/product/printer (MFP) and a machine tool. For example, as the malfunction phenomenon, "broken", "deformed", "abnormal sound", and "deteriorated" are given and managed. Note that these malfunction phenomena are, for example, information that a maintenance person who in charge of maintenance of the managed apparatus acquires in advance from a call center or the like that manages the managed apparatus and inputs to the object-to-be-extracted management table based on the acquired information.

The countermeasure is information obtained by extracting what kind of countermeasure has been taken in the managed apparatus to be maintained. For example, as the countermeasure, "replaced a unit", "replaced a part", and "repaired" are given and managed.

The location is information obtained by extracting at which (where) a malfunction has occurred in the managed apparatus to be maintained. For example, as the location, "Part A", "Part B" and the like are given and managed. In another example, the above various data (the malfunction phenomenon, the countermeasure, and the location) managed in the object-to-be-extracted management table are automatically extracted using a named entity extraction method or predicate-argument structure analysis, for example. In still another example, the above various data are automatically extracted using a named entity extraction method or predicate-argument structure analysis, for example, in a process of creating the knowledge source 300 described below, instead of being managed as table data.

Image Information Management Table:

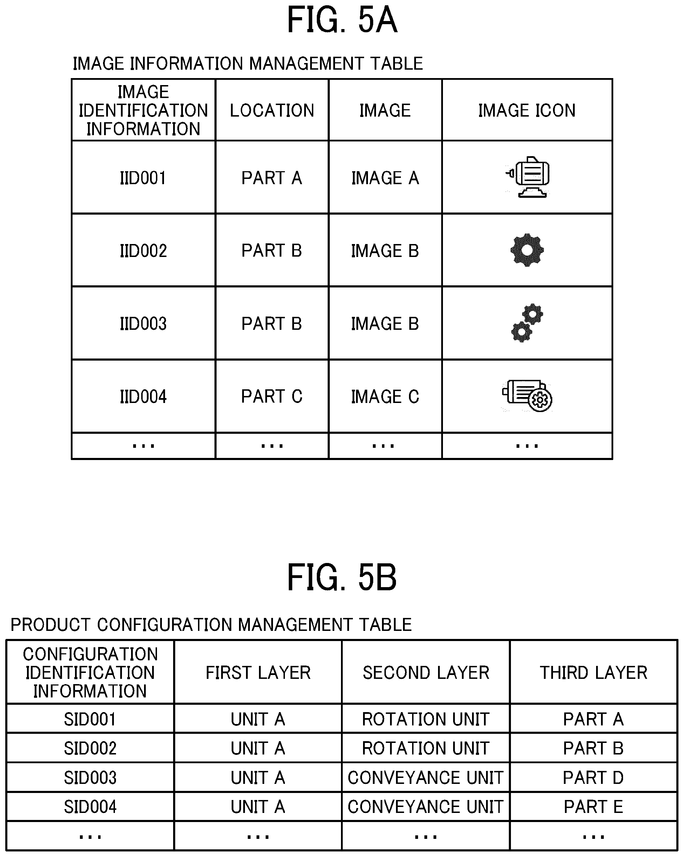

FIG. 5A is a table illustrating an example of data structure of an image information management table, according to the present embodiment. In the storage unit 3000, an image information management DB 3002, which is implemented by the image information management table as illustrated in FIG. 5A, is stored. The image information management table stores, for each image identification information, a location such as a part or a unit of the managed apparatus, an image, and an image icon representing the image in association with each other. Among these items, the image identification information indicates identification information identifying parts, units, and the like of the managed apparatus. For example, as the image identification information, "IID001", "IID002" or the like are given and managed. Note that an MFP and a machine tool are merely examples of the specific example of the managed apparatus.

As described above with reference to FIG. 4 for the object-to-be-extracted management table (the object-to-be-extracted management DB 3001), the location is information obtained by extracting at which (where) a malfunction has occurred. For example, as the location, "Part A", "Part B" and the like are given and managed.

The image indicates an image of a part, a unit, or the like of the managed apparatus. For example, as the image, "Image A", "Image B" and the like are given and managed. The image icon indicates an icon corresponding to the image. The image icon is given and managed in an image file format of each icon (e.g., .bmp, .jpg).

Product Configuration Management Table:
FIG. 5B is a table illustrating an example of data structure of a product configuration management table, according to the present embodiment. In the storage unit 3000, a product configuration management DB 3003, which is implemented by the product configuration management table as illustrated in FIG. 5B, is stored. The product configuration management table stores, for each configuration identification information, a first layer, a second layer, and a third layer in association with each other. Among these items, the configuration identification information indicates identification information identifying an object of configuration for each layer such as parts or unit of the managed apparatus. For example, as the configuration identification information, "SID001", "SID002" and the like are given and managed.

The first layer is at the highest level, when parts, units, and the like of the managed apparatus is represented by computer-aided design (CAD) data. For example, as the first layer, "Unit A" is given and managed. The second layer is at the next lower level to the first layer to which Unit A belongs. For example, as the second layer, a "rotation unit", a "conveyance unit" and the like are given and managed. The third layer is at the next lower level to the second layer and includes parts of the second layer. For example, as the third layer, "Part A", "Part B" and the like are given and managed.

In another example, the product configuration management table includes up to the second layer, instead of the third layer. In still another example, the product configuration management table further includes the fourth or higher layer.

In another example, the object-to-be-extracted management table (the object-to-be-extracted management DB 3001), the image information management table (image information management DB 3002), and the product configuration management table (product configuration management DB 3003) are data managed in respective certain areas of the storage unit 3000, instead of being managed as table data.

Each Functional Unit of Information Processing Apparatus:
A detailed description is now given of each functional unit of the information processing apparatus 3. The transmission/reception unit 31 of the information processing apparatus 3 illustrated in FIG. 3 is implemented mainly by the network I/F 309 illustrated in FIG. 2 operating under control of the CPU 301. The transmission/reception unit 31 exchanges various data (or information) with the input apparatus 2 through the communication network 100. Further, the transmission/reception unit 31 receives a question from a user in a natural sentence and inputs the question to the information processing apparatus 3. Any suitable interfaces are used, such as a chatbot or a text entry box on a web browser. Furthermore, the transmission/reception unit 31 also transmits relevant image information to the input apparatus 2 in addition to the answer to the question given by the user. In one example, the question from the user includes a question in voice output by a machine, in addition to a natural sentence. In the present embodiment, the transmission/reception unit 31 functions as or includes means caused to function as examples of transmission means and reception means.

The analysis unit 32 is implemented mainly by processing of CPU 301 illustrated in FIG. 2. The analysis unit 32 analyzes the input question sentence and extracts structured information. For example, the analysis unit 32 analyzes named entities such as part names and unit names of managed apparatus and relations between a location and operation, using a predicate argument analyzer, deep learning, etc., to extract the structured information. In the present embodiment, the analysis unit 32 functions as or includes means caused to function as an example of analysis means.

The extraction and generation unit 33 is implemented mainly by processing of CPU 301 illustrated in FIG. 2. The extraction and generation unit 33 extracts and creates the "knowledge source 300" indicating answer assist information that assists creation of an answer to a question by a user from a natural language data group and a structured/unstructured data group, which are data groups as an example of multi-modal. In the present embodiment, the extraction and generation unit 33 functions as or includes means caused to function as an example of extraction means.

The determination unit 35 is implemented mainly by processing of CPU 301 illustrated in FIG. 2. The determination unit 35 performs various determinations in the information processing apparatus 3. In the present embodiment, the determination unit 35 functions as or includes means caused to function as an example of determination means.

The answer creation unit 36 is implemented mainly by processing of CPU 301 illustrated in FIG. 2. The answer creation unit 36 checks the structured information obtained by the analysis unit 32 with the knowledge source 300 extracted and generated by the extraction and generation unit 33. Further, the answer creation unit 36 generates an answer based on determination in accordance with similarity calculated by graph structure matching or by mapping a graph network to a common vector space in recent years. Furthermore, the answer creation unit 36 generates an inference process in addition to the answer to the question by using the knowledge source 300 structured by the extraction and generation unit 33. Furthermore, the extraction and generation unit 33 associates parts, units, and the like of the managed apparatus with image information of the parts, units, and the like, whereby enabling the answer creation unit 36 to generate image information relating to the answer in addition to the answer to a question content. In the present embodiment, the answer creation unit 36 functions as or includes means caused to function as an example of creation means.

The storing and reading unit 39 is implemented mainly by processing of the CPU 301 illustrated in FIG. 2 to at least one of the ROM 302 and the HD 304. The storing and reading unit 39 stores various data (or information) in the storage unit 3000 and/or reads various data (or information) from the storage unit 3000. In the present embodiment, the storing and reading unit 39 functions as or includes means caused to function as an example of storing and reading means.

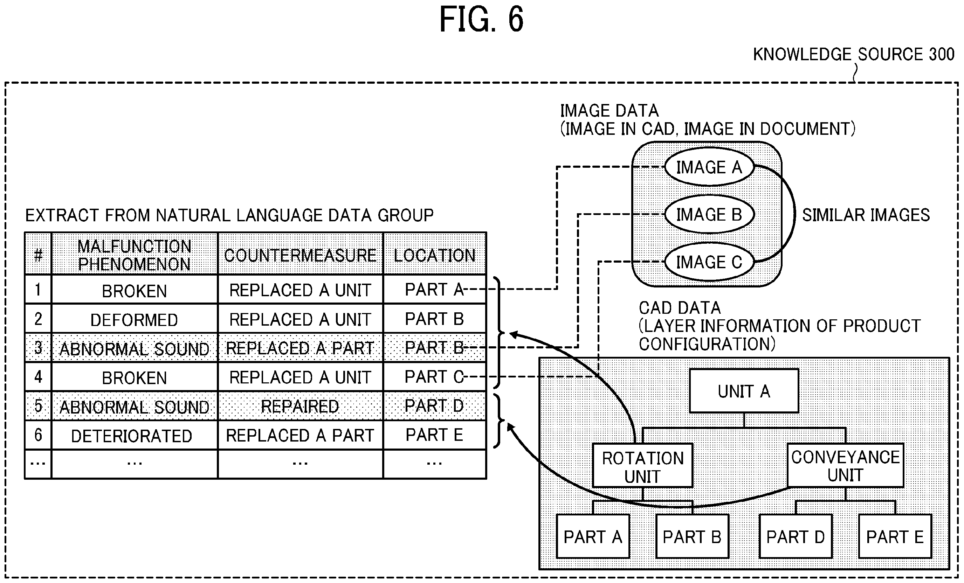

Form of Knowledge Source:
A description is now given of the knowledge source 300, according to the present embodiment. FIG. 6 is a model diagram illustrating an example of a form of the knowledge source 300 according to the present embodiment. As illustrated in FIG. 6, for example, as one form of multi-modal, the knowledge source 300 is constructed as a model diagram in which information extracted from a natural language data group and information relating to image data and CAD data are derived by deep learning and associated with each other. Further, examples of the form of the knowledge source 300 include, but are not limited to, a structured knowledge graph and a relational database (RDB).

The knowledge source 300 is extracted and generated from a natural language data group and a structured/unstructured data group described below, which are given in advance. In the present embodiment, a natural language data group is treated as an example of natural language information, and the structured/unstructured data group is treated as an example of non-language information other than the natural language information. The natural language data group is, for example, data related to a natural language held by a manufacturer as a provider of the managed apparatus to be maintained and managed by the question answering system. The natural language data group as an example of the natural language information includes a design specification, a manual, a maintenance report, and parts information. On the other hand, the structured/unstructured data group as an example of the non-language information is an example of a data group other than the natural language data group. Among the structured/unstructured data group, for example, CAD data, three-dimensional (3D) CAD data (mechanism and configuration information of a product), and a bill of material (BOM) are structured data, and a CAD image and an image in a document are unstructured data. As a form of the knowledge source 300, for example, a structured knowledge graph and an RDB are given.

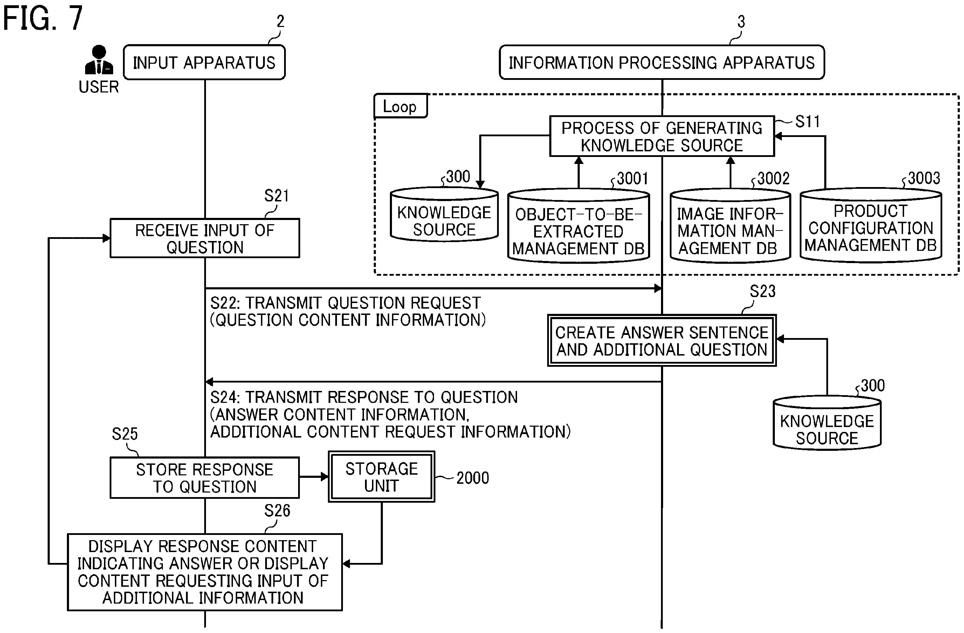

Regarding the knowledge source 300, a description is given of a case as a specific example in which a user who uses the input apparatus 2 or a person in charge of maintenance of the managed apparatus searches for a countermeasure for a malfunction that has occurred in the managed apparatus using the input apparatus 2. In the following description, the user who uses the input apparatus 2 or the person in charge of maintenance of the managed apparatus is referred to as a "user or a maintenance person" for the sake of explanatory convenience. Specific processing includes: (1) information extraction from the natural language data group; (2) information extraction from the data group other than the natural language data group; and association of results obtained by (1) and (2).
(1) Extraction of Information from Natural Language Data Group In an example in which the natural language data group is data held by the manufacturer that provides the managed apparatus, examples of the natural language data group include, but are not limited to, a design specification, a manuals, a maintenance report, and parts information. From the above examples, location information and phenomenon information (e.g., a malfunction phenomenon and a countermeasure) are automatically extracted using at least one of the named entity extraction method and the predicate-argument structure analysis. The location information indicates where parts, units, or the like are arranged in a product. The phenomenon information indicates a phenomenon occurred in the parts, units, or the like. Although FIG. 7 illustrates an example in which the knowledge source 300 is in an RDB format, in another example, the knowledge source is expressed by a graph network structure.

As a specific example of the information extraction from the natural language data group, the object-to-be-extracted management table illustrated in FIG. 4 (the object-to-be-extracted management DB 3001, see FIG. 4) is described as an example. In the object-to-be-extracted management table, the malfunction phenomenon, the countermeasure, and the location as items are stored and managed in association with each other for each for each state identification information. Such the object-to-be-extracted management table is obtained by converting, for example, a fact such as a report that "since a damage was found in Part A, the unit is replaced as the countermeasure" into table data. Such the conversion is performed as a previous step. In other words, as the extraction of information from the natural language data group, past phenomena and countermeasure contents are converted to table data.

(2) Extraction of Information from Data Group Other Than Natural Language Layer structure information of a product is acquired from CAD data as the data group other than the natural language data group. In another example, a BOM is also used. Association of an image in a CAD and an image in a document as image data with the natural language data (information managed by "location" in FIG. 6) is implemented by an approach based on deep learning using, for example, image captioning. The image captioning is a process of outputting a textual description for an input image. As illustrated in FIG. 6, images of the image data and the natural language data that are associated with each other are managed by being connected to each other by, for example, a dotted line and a solid line arrow, whereby enabling one to recognize that they are associated with each other. In substantially the same manner, as illustrated in FIG. 6, a product configuration in each configuration of the CAD data and a set of the natural language data (a portion indicated by curly braces) that are associated with each other are managed by being connected to each other by, for example, a solid arrow, whereby enabling one to recognize that they are associated with each other. For example, FIG. 6 indicates that the locations "Part A", "Part B", and "Part B" in the natural language data group are associated with the "rotation unit" of the CAD data. In other words, FIG. 6 indicates that the parts of the "rotation unit" are "Part A", "Part B", and "Part C". As described above, for example, in a case where the structured data is CAD data, the information processing apparatus 3 (the extraction and generation unit 33) is configured to generate the knowledge source by using layer structure (whole-part relationship) information of machine parts. Such the incorporation of the CAD data of the managed apparatus, which cannot be recognized only by the natural language data group, as mechanism information, improves the accuracy of an answer to a particular question.

"Part A" and "Part C" managed as the information of "location" in the knowledge source 300 illustrated in FIG. 6 actually refers to the same part, but they are described as different parts in a document such as a design specification. For this reason, it is difficult to determine identical/non-identical or similar/dissimilar based on language expression. To address such an issue, "Part A" is identified as another expression of "Part C" ("Part C" is identified as another expression of "Part A"), based on the similarity of images such as illustrations or photographs associated with the words "Part A" and "Part C". Accordingly, in the knowledge source 300 illustrated in FIG. 6, since "Image A" and "Image C" are similar images, the knowledge source 300 provides information indicating that "Part A" = "Part C".

Processes or Operation of Embodiment:
A description is now given of an operation and processes performed by the question answering system 1 according to the present embodiment, with reference to FIG. 7 to FIG. 12.

Knowledge Source Generation Processing:
FIG. 7 is a sequence diagram illustrating examples of an operation of generating the knowledge source 300 and an operation of responding to a question, according to the present embodiment. As illustrated in FIG. 7, the extraction and generation unit 33 of the information processing apparatus 3 searches items including the malfunction phenomenon, the countermeasure, the location, the image, the image icon, the layers of the product stored in the object-to-be-extracted management table (the object-to-be-extracted management DB 3001, see FIG. 4), the image information management table (the image information management DB 3002, see FIG. 5A), and the product configuration management table (the product configuration management DB 3003, see FIG. 5B), to extract the knowledge source 300 illustrated in FIG. 6 (step S11). At this time, the extraction and generation unit 33 extracts an expression obtained by paraphrasing a word included in the natural language information based on the similarity between the word and an image included in the non-language information. Specifically, the extraction and generation unit 33 quantify Image A and Image C managed in the image information management table (the image information management DB 3002, see FIG. 5A) to numerical values, to extract images that are similar to each other as the similar images (identical images). Further, the extraction and generation unit 33 extracts Part A and Part C respectively associated with (corresponding to) Image A and Image C as the same parts. In other words, the extraction and generation unit 33 extracts Part A and Part C as words expressed in other words. Thus, in a case where Image A and Image C are similar images, Part A and Part C are the same parts.

In one example, the extraction and generation unit 33 updates the knowledge source 300 according to an update frequency of the object-to-be-extracted management table (the object-to-be-extracted management DB 3001, see FIG. 4), the image information management table (image information management DB 3002, see FIG. 5A), and the product configuration management table (the product configuration management DB 3003, see FIG. 5B). In another example, the extraction and generation unit 33 updates the knowledge source 300 at a preset timing or time period.

Question Input Processing:
A description is now given of an operation of receiving an input of a question performed by the input apparatus 2 and an operation of responding to the question performed by the information processing apparatus 3. As illustrated in FIG. 7, the sound input/output unit 23 of the input apparatus 2 receives a particular question input to the managed apparatus given by a speech of the user or the maintenance person (step S21). At this time, the user or the maintenance person inputs a question to the input apparatus 2 by speaking, for example, "Please tell me how to deal with the abnormal sound XXXYYY", in order to search for how to deal with a malfunction of the managed apparatus. Thus, the sound input/output unit 23 of the input apparatus 2 receives a specific question to the managed apparatus by a speech of the user or the maintenance person. Next, the conversion and creation unit 27 convert sound information in natural language or the like input by the sound input/output unit 23 into text (character) information, to create a question sentence. In another example, the operation reception unit 22 of the input apparatus 2 receives an input of a question to the input apparatus 2 by text input or the like by the user or the maintenance person. In this case, the operation reception unit 22 of the input apparatus 2 receives a specific question to the managed apparatus by the text input by the user or the maintenance person.

Example Display Screen:

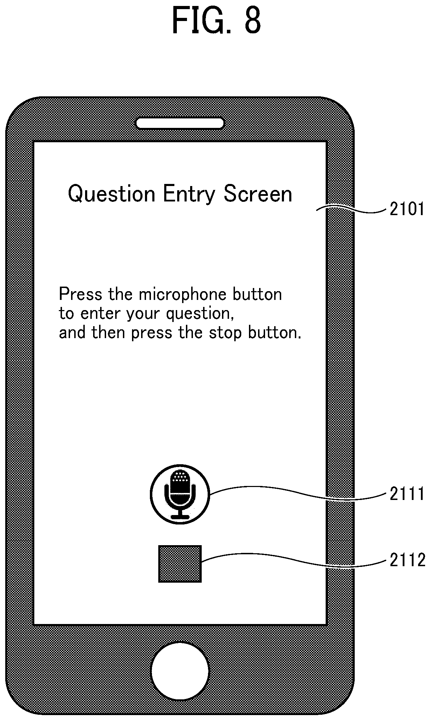

FIG. 8 is an illustration of an example of a screen display for receiving an input of a question, according to the present embodiment. As illustrated in FIG. 8, when the user or the maintenance person is ready to ask a question, the display control unit 24 controls the display 206 to display a question reception screen 2101 including the following contents. On the question reception screen 2101, "Question Entry Screen" and a predetermined message requesting the user to input a question are displayed. Further, the question reception screen 2101 includes a "microphone" button 2111 (hereinafter, referred to as a microphone button 2111) used as a microphone by the user or the maintenance person, and a "stop" button 2112 (hereinafter, referred to as a stop button 2112) that is operated after the user or the maintenance person speaks a question content. Thus, after confirming a content displayed on the question reception screen 2101, the user operates (e.g., presses or taps) the microphone button 2111 to speak the question content as described above, and then operate the stop button 2112. In response to the user's operation, the screen transitions to another screen.

Question Response Processing:
Referring again to FIG. 7, the transmission/reception unit 21 transmits the question sentence obtained by the conversion and creation unit 27 to the information processing apparatus 3 (step S22). Thus, the transmission/reception unit 31 of the information processing apparatus 3 receives a question request transmitted by the input apparatus 2. At this time, the question request includes question content information indicating the question content input by the user or the maintenance person.

Operation of Creating Answer and Additional Question:
In response to receiving the question request, the information processing apparatus 3 performs a process of creating an answer sentence or an additional question to the question indicated by the question content information (step S23). Specifically, the answer creation unit 36 refers to the knowledge source 300, to create an answer sentence corresponding to the content of the given question or an additional question indicated by additional content request information for requesting an input of an additional content for narrowing down an answer to the question.

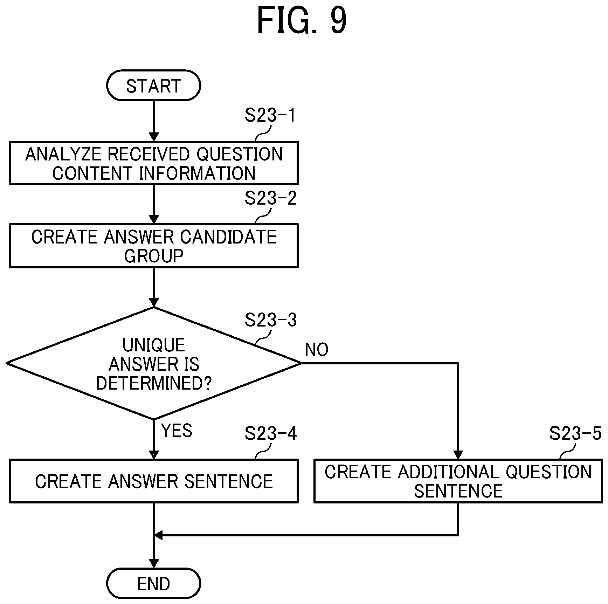

FIG. 9 is a flowchart illustrating an example of a process of creating an answer and an additional question, according to the present embodiment. As illustrated in FIG. 9, the analysis unit 32 of the information processing apparatus 3 analyzes the received question content information including the content "Please tell me how to deal with the abnormal sound of XXXYYY" (step S23-1).

Next, the answer creation unit 36 creates an answer candidate group, which is candidates for an answer to the question, by using the knowledge source 300 generated by the extraction and generation unit 33 (step S23-2). Specifically, based on a content obtained by the analysis, the answer creation unit 36 creates two information items as an answer source. Of these two information items, one information item is "location": "Part B", "countermeasure": "replace a unit", and the other information item is "location": "Part D", "countermeasure": "repair", both including "abnormal sound" in the malfunction phenomenon.

Next, the determination unit 35 determines whether an answer is uniquely determined from the created answer candidate group (step S23-3). When the determination unit 35 determines that an answer is uniquely determined from the created answer candidate group (step S23-3: YES), the answer creation unit 36 creates an answer sentence to the question based on the content of the created answer candidate group (step S23-4). Then, the operation of the flowchart ends.

By contrast, when the determination unit 35 determines that an answer is not uniquely determined from the created answer candidate group (step S23-3: NO), the answer creation unit 36 creates an additional question sentence for the question to obtain information for uniquely determining an answer to the question (step S23-5). Then, the operation of the flowchart ends. In the example of step S23-2, since the answer creation unit 36 creates the two information items as the answer source, an answer is not uniquely determined. Accordingly, the answer creation unit 36 performs the process of step S23-5 described above. Then, the operation of the flowchart ends. In this case, a content of the additional question, that is, the additional content for selecting an answer to the question is, for example, "Which of the "rotation unit" or the "conveyance unit" is the location where the abnormal sound is occurring?".

Referring again to FIG. 7, the transmission/reception unit 31 transmits, to the input apparatus 2, the response to the question, the response being created by the answer creation unit 36 (step S24). Thus, the transmission/reception unit 21 of the input apparatus 2 receives the response to the question transmitted by the information processing apparatus 3. The received response to the question includes an answer sentence as answer content information to the question, or additional content request information requesting an input of additional content for selecting an answer to the question.

In response to receiving the response to the question, the storing and reading unit 29 temporarily stores the received response to the question in a particular area of the storage unit 2000 (step S25).

Next, the display control unit 24 reads the response information indicating the temporarily stored answer or the information requesting an input of additional content from the storage unit 2000 in cooperation with the storing and reading unit 29, displays the read response information or information requesting an input of additional content on the display 206 (step S26). Note that, in response to receiving an additional question from the user or the managed apparatus after performing the process of step S26, the operation transitions to the process of step S21, and the input apparatus 2 repeats the subsequent processes.

Referring again to step S22, when new information (question) is given by the user or the maintenance person, the answer creation unit 36 performs the processes of step S23-1 to step S23-4 or step S23-5 again in accordance with the given information, and repeats the processes until an answer is uniquely determined.

Example Display Screen:

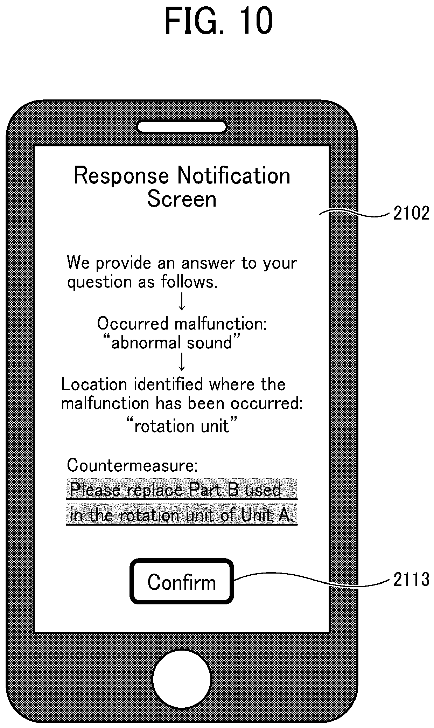

FIG. 10 is an illustration of an example of a screen display displaying contents of an inference process, according to the present embodiment. As illustrated in FIG. 10, in response to receiving the response to the question transmitted by the information processing apparatus 3, the display control unit 24 controls the display 206 to display a response notification screen 2102 including the following contents. On the response notification screen 2102, "Response Notification Screen" and a response as an answer content to the question addressed to the user or the maintenance person are displayed. This answer content created by the answer creation unit 36 include, for example, contents indicating inference through which information including a malfunction that has occurred, a location identified as the occurrence source, and a countermeasure for the malfunction has been derived. The input apparatus 2 receives answer content information related to the answer content from the information processing apparatus 3, and displays the received answer content information on the display 206. This enables the information processing apparatus 3 to present, to the user or the maintenance person, a process (inference process) through which the answer content as a response to the content of the question is inferred via the input apparatus 2. In other words, in response to a particular question given by the user or the maintenance person, the information processing apparatus 3 presents a specific basis on which the response to the particular question is obtained to the user or the maintenance person. Thus, even when deep learning is used, the question answering system 1 ensures reliability for the user or the maintenance person.

Further, the response notification screen 2102 includes a "confirm" button 2113 (hereinafter, referred to as a confirm button 2113). Thus, the user or the maintenance person confirms the content displayed on the response notification screen 2102, and then operates (e.g., presses or taps) the confirm button 2113. In response to the operation by the user or the maintenance person, the screen transitions to another screen.

The response notification screen 2102 illustrated in FIG. 10 is an example screen on which an e-mail transmitted by the information processing apparatus 3 is received and displayed. In another example, the input apparatus 2 accesses the information processing apparatus 3 to obtain some information, and the display control unit 24 of the input apparatus 2 displays a screen based on the obtained information. In other words, instead of the e-mail receiving screen, the display control unit 24 controls the display 206 to display a screen based on screen information obtained by using a browser, for example.

Example Display Screen:

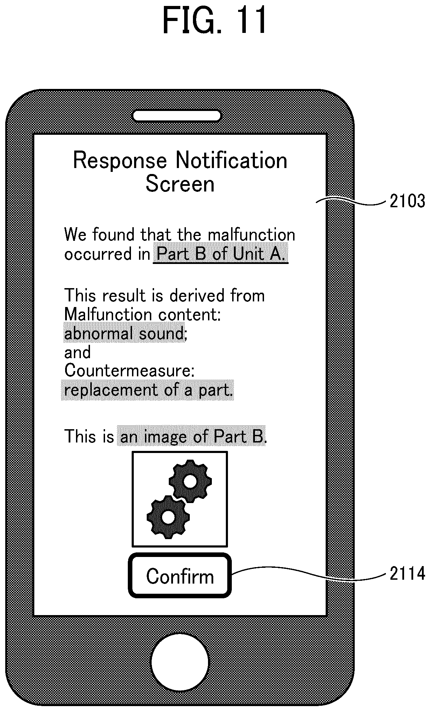

FIG. 11 is an illustration of an example of a screen display displaying contents of a process explanation, according to the present embodiment. As illustrated in FIG. 11, in response to receiving the response to the question transmitted by the information processing apparatus 3, the display control unit 24 controls the display 206 to display a response notification screen 2103 including the following contents. On the response notification screen 2103, "Response Notification Screen" and a response as an answer content to the question addressed to the user or the maintenance person are displayed. This answer content created by the answer creation unit 36 includes, for example, items such as a sentence explaining where a malfunction has occurred, a content of the malfunction, and a countermeasure for the malfunction. Further, the answer content includes an explanation indicating that a result is derived from the above-described items and image information of a part used for coping with the malfunction. The input apparatus 2 receives answer content information related to the answer content from the information processing apparatus 3, and displays the received answer content information on the display 206. This enables the information processing apparatus 3 to present, to the user or the maintenance person, the details of the answer content information as a response to the content of the question and how the response is response is obtained (explanation process) via the input apparatus 2. In other words, in response to a particular question given by the user or the maintenance person, the information processing apparatus 3 provides a response including specific visual information. Thus, even when deep learning is used, the question answering system 1 provides the user or the maintenance person with an explanation as to how the answer is obtained and also improves the efficiency of repair work or the like. Further, by also extracting a cause or the like of the malfunction phenomenon, a root cause related to the malfunction phenomenon that has occurred in the managed apparatus is presented.

Further, the response notification screen 2103 includes a "confirm" button 2114 (hereinafter, referred to as a confirm button 2114). Thus, the user or the maintenance person confirms the content displayed on the response notification screen 2103, and then operates (e.g., presses or taps) the confirm button 2114. In response to the operation by the user or the maintenance person, the screen transitions to another screen.

The response notification screen 2103 illustrated in FIG. 11 is an example screen on which an e-mail transmitted by the information processing apparatus 3 is received and displayed. In another example, the input apparatus 2 accesses the information processing apparatus 3 to obtain some information, and the display control unit 24 of the input apparatus 2 displays a screen based on the obtained information. In other words, instead of the e-mail receiving screen, the display control unit 24 controls the display 206 to display a screen based on screen information obtained by using a browser, for example.

In still another example, the display control unit 24 at least one of the inference process through which the answer to the particular question is obtained as illustrated in FIG. 10 and the explanation process of the answer to the particular question as illustrated in FIG. 11 on the display 206. In other words, in one example, the display control unit 24 displays both the inference process and the explanation process of the answer to the particular question on the display 206.

Example Display Screen:

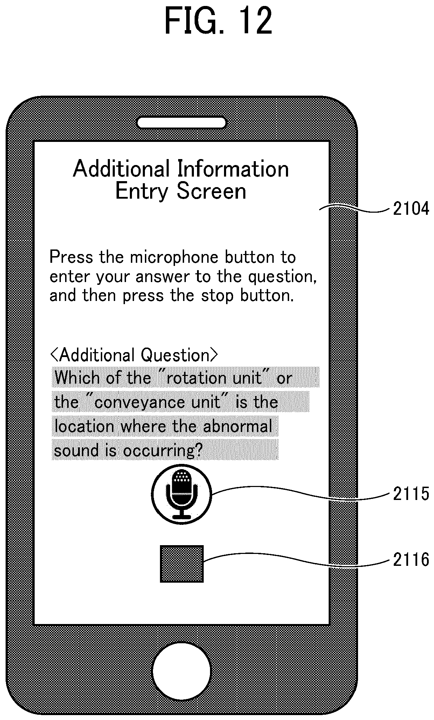

FIG. 12 is an illustration of an example of a screen display for receiving an input of additional information, according to the present embodiment. As illustrated in FIG. 12, in response to the process of step S24, the display control unit 24 controls the display 206 to display an additional information reception screen 2104 including the following contents. On the additional information reception screen 2104, "Additional Information Entry Screen" and a message requesting an input of additional information are displayed. Further, the additional information reception screen 2104 includes a "microphone" button 2115 (hereinafter, referred to as a microphone button 2115) used as a microphone by the user or the maintenance person, and a "stop" button 2116 (hereinafter, referred to as a stop button 2116) that is operated after the user or the maintenance person speaks a content of information. Thus, after confirming a content displayed on the additional information reception screen 2104, the user or the maintenance person operates (e.g., presses or taps) the microphone button 2115 to speak a content to be input, and then operate the stop button 2116. In response to the operation by the user or the maintenance person, the screen transitions to another screen. Specifically, the display control unit 24 displays, on the additional information reception screen 2104, a content that "Which of the "rotation unit" or the "conveyance unit" is the location where the abnormal sound is occurring?", as described above as an example with reference to step S23-5, to present a screen for receiving new information (question) from the user or the maintenance person. Then, in response to new information (question) given by the user or the maintenance person, the answer creation unit 36 performs the processes of steps S23-1 to S23-4 or S23-5 again in accordance with the given information, and repeats the processes until an answer is uniquely determined. This enables the information processing apparatus 3 to improve the accuracy of an answer (response) to the questioned content to the user or the maintenance person via the input apparatus 2. In other words, in response to a particular question given by the user or the maintenance person, the information processing apparatus 3 eliminates the possibility of making an ambiguous response as much as possible and eventually provides a response that the user or the maintenance person wants to get. Thus, even when deep learning is used, the question answering system 1 ensures accuracy for the user or the maintenance person.

The description given above is of the examples of the screen display generated in response to the speech by the user or the maintenance person such as "Please tell me how to deal with the abnormal sound XXXYYY", in order to search for how to deal with the malfunction of the managed apparatus. In another example, in response to a speech by the user or the maintenance person, for example, "The motor seems damaged, so please tell me how to deal with it" in order to search for how to deal with the malfunction of the managed apparatus, the answer creation unit 36 creates another additional question in step S23-5. For example, the answer creation unit 36 creates an additional question sentence including a content such as "The location where the motor is damaged can be either "Part A" or "Part C". Do you know which one is damaged?" Further, in this case, "Part A" and "Part C" are managed as the same part in the knowledge source 300. Accordingly, in one example, the display control unit 24 of the input apparatus 2 controls the display 206 to display both the image icon of "Image A" and the image icon of "Image C" transmitted by the information processing apparatus 3 in the step S24, to allow the user or the maintenance person to select either one of the displayed image icons.

In one example, in the question answering system according to the present embodiment, for example, when the above-described processes of step S22 and step S24 are performed, another apparatus or the like resides between the input apparatus 2 and the information processing apparatus 3. In other words, in one example, information (data) to be exchanged between the input apparatus 2 and the information processing apparatus 3 is exchanged via another apparatus. The above-described configuration and processing may also be applied to other processing steps between the input apparatus 2 and the information processing apparatus 3.

In the present embodiment, the user and the maintenance person are collectively referred to as a "user". Further, the user includes, in addition to the maintenance person, a service person who manages various services provided by the managed apparatus, and a repair person who repairs the managed apparatus.

As described above, according to the present embodiment, the information processing apparatus 3 refers to the knowledge source 300, to create an answer sentence or an additional question corresponding to a content of a given question (step S23). Further, the information processing apparatus 3 transmits, as a response to the question to the input apparatus 2, an answer sentence to the question or the additional content request information requesting an input of additional content for selecting an answer to the question (step S24). Thus, since the information processing apparatus 3 requests the input apparatus 2 for new information for selecting an answer to the question, the accuracy of an answer to a given particular question content is improved.

Further, to obtain desired information for a question content given by the user, the information processing apparatus 3 analyzes information across modalities and performs a search based on combination of images and language information, to generate an answer. Specifically, the information processing apparatus 3 presents, to the user, a process (inference process) of inferring an answer content with reference to the knowledge source 300 and a process (explanation process) of how an answer is obtained, with respect to a particular question content. This enables the information processing apparatus 3 to improve the reliability for the user and the work efficiency of the user.

Supplementary Information on Embodiment:
The functions of one embodiment described above can be implemented by a computer executable program described in a legacy programming language such as an assembler, C, C++, C#, and Java^{®}, or an object-oriented programming language. The program to implement the functions in each embodiment can be distributed via a telecommunication line.

Further, the program for executing the functions of one embodiment can be stored, for distribution, on a storage medium such as a ROM, an electrically erasable programmable read-only memory (EEPROM), an erasable programmable read-only memory (EPROM), a flash memory, a flexible disk (FD), a CD-ROM, a DVD-ROM, a DVD-RAM, a DVD-Rewritable (DVD-RW), a Blu-ray^{®} disk, a secure digital (SD) card, or a magneto-optical disc (MO).

Furthermore, some or all of the functions of one embodiment may be mounted on a programmable device (PD) such as an application specific integrated circuit (ASIC), a digital signal processor (DSP), a field programmable gate array (FPGA), a system on a chip (SOC), or a graphics processing unit (GPU), and distributed by a storage medium as a circuit configuration data (bit stream data) downloaded to the PD in order to implement the functions of the embodiment on the PD, or as data described by Hardware Description Language (HDL), Very High Speed Integrated Circuits Hardware Description Language (VHDL), Verilog-HDL, etc., for generating circuit configuration data.

Each of the tables obtained by the above-described embodiment may be generated by learning effect of machine learning. In addition, in alternative to using the tables, the data of each related item may be classified by the machine learning. In the present disclosure, the machine learning is defined as a technology that makes a computer to acquire human-like learning ability. In addition, the machine learning refers to a technology in which a computer autonomously generates an algorithm required for determination such as data identification from learning data loaded in advance and applies the generated algorithm to new data to make a prediction. Any suitable learning method is applied for machine learning, for example, any one of supervised learning, unsupervised learning, semi-supervised learning, reinforcement learning, and deep learning, or a combination of two or more those learning.

In another example, the input apparatus 2 described in one embodiment as an example includes the functions and means of the information processing apparatus 3, whereby enabling the input apparatus to function as an input response apparatus. In this case, the input apparatus includes functional units including the knowledge source and the extraction and generation unit that extracts and generates the knowledge source.

Although the information processing apparatus, the question answering system, the information processing method, and the program according to embodiments of the present invention have been described above, the above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general-purpose computer, a personal digital assistant, a Wireless Application Protocol (WAP) or third-generation (3G)-compliant mobile telephone, and so on.

Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (3) that responds an answer to a question transmitted by an input apparatus (2) that inputs the question, the information processing apparatus (3) comprising:
reception means (31) for receiving the question transmitted by the input apparatus (2);
extraction means (33) for obtaining answer source information for creating an answer to the received question, the answer source information associating natural language information given in advance with non-language information by deep learning, the non-language information including configuration information; and
transmission means (31) for transmitting, to the input apparatus (2), answer content information to the question or additional content request information requesting an input of additional content to the question, the answer content information and the additional content request information being created based on the answer source information.

2. The information processing apparatus (3) of claim 1, wherein
the transmission means (31) transmits, as the additional content request information, content for selecting the answer to the question to the input apparatus.

3. The information processing apparatus (3) of claim 1 or claim 2, wherein
the extraction means (33) extracts an expression obtained by paraphrasing a word included in the natural language information, based on similarity between the word and an image included in the non-language information.

4. The information processing apparatus (3) of any one of claim 1 to claim 3, wherein
the extraction means (33) obtains the answer source information based on information including a design specification, a manual, a maintenance report, and parts information as the natural language information and information including computer-aided design (CAD) data, a bill of material, a CAD image, and an image in a document as the non-language information.

5. The information processing apparatus of any one of claim 1 to claim 4, further comprising:
creation means (36) for creating the answer content information to the question or the additional content request information requesting an input of additional content to the question, based on the answer source information,
wherein, when the answer content information is created, the creation means (36) creates, as the answer content information to the question, content including at least one of an inference process through which the answer is created and an explanation process indicating how the answer is created.

6. An information processing system (1) comprising:
an input apparatus (2) that inputs a question; and
the information processing apparatus (3) of claim 5 that responds an answer to the question to the input apparatus (2),
the input apparatus (2) including display control means (24) for controlling display means (206) to display screen information including at least one of the inference process and the explanation process.

7. The information processing system (1) of claim 6, wherein
the input apparatus (2) further includes input means (22, 23) for receiving an input of the question in sound data or text data.

8. An information processing method performed by an information processing apparatus (3) that responds an answer to a question transmitted by an input apparatus (2) that inputs the question, the information processing method comprising:
receiving (S22) the question transmitted by the input apparatus (2);
obtaining (S11) answer source information for creating an answer to the received question, the answer source information associating natural language information given in advance with non-language information by deep learning, the non-language information including configuration information; and
transmitting (S24), to the input apparatus (2), answer content information to the question or additional content request information requesting an input of additional content to the question, the answer content information and the additional content request information being created based on the answer source information.

9. Carrier means carrying computer readable code for controlling a computer to perform the method of claim 8.
